# EUROPEAN PATENT SPECIFICATION

(11) **EP 3 257 316 B1**
(45) Date of publication and mention of the grant of the patent: **27.01.2021**
(21) Application number: 15706713.3
(22) Date of filing: 12.02.2015
(51) Int. Cl.: H04W 76/10, H04W 76/19, H04W 76/30

(54) **METHOD AND DEVICES FOR CONNECTING A USER EQUIPMENT TO A TELECOMMUNICATION NETWORK**
VERFAHREN UND VORRICHTUNGEN ZUR VERBINDUNG EINES BENUTZERGERÄTS AN EIN TELEKOMMUNIKATIONSNETZWERK
PROCÉDÉ, SYSTÈME ET DISPOSITIFS DE CONNEXION D'UN ÉQUIPEMENT D'UTILISATEUR (UE) À UN RÉSEAU DE TÉLÉCOMMUNICATION

(43) Date of publication of application: 20.12.2017
(73) Proprietor: Telefonaktiebolaget LM Ericsson (publ), 164 83 Stockholm (SE)
(72) Inventor: AXELSSON, Samuel, 589 33 LINKÖPING (SE); BERGSTRÖM, Andreas, 590 47 VIKINGSTAD (SE); GUNNARSSON, Fredrik, 587 50 LINKÖPING (SE); SVEDEVALL, Sofia, 590 45 BROKIND (SE)
(74) Representative: Zacco Sweden AB
(86) International application number: PCT/EP2015/052997
(87) International publication number: WO 2016/128059

(56) References cited:
- EP-A1- 2 373 113
- EP-A2- 1 928 126
- WO-A1-2013/154387
- WO-A1-2014/187468
- US-A1- 2013 260 740
- QUALCOMM INCORPORATED: "Proposals for RRC signalling optimizations", 3GPP DRAFT; R2-150363_PROPOSALS FOR RRC SIGNALLING OPTIMIZATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Athens, Greece; 20150209 - 20150213 31 January 2015 (2015-01-31), XP050952479, Retrieved from the Internet: URL:http://www.3gpp.org/ftp/tsg_ran/WG2_RL 2/TSGR2_89/Docs/ [retrieved on 2015-01-31]
- ERICSSON: "Re-usable Configurations in RRC Signaling", 3GPP DRAFT; R2-144891 RE-USABLE CONFIGURATIONS IN RRC SIGNALING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, US; 20141117 - 20141121 7 November 2014 (2014-11-07), XP050886457, Retrieved from the Internet: URL:http://www.3gpp.org/ftp/tsg_ran/WG2_RL 2/TSGR2_88/Docs/ [retrieved on 2014-11-07]

## Description

### Technical field

The present invention generally relates to a method of connecting a User Equipment, UE, to a telecommunication network via an access node comprised by the network, and, more specifically, to method steps performed to determine connection configuration parameters for the UE.

### Background

In case a User Equipment, UE, intends to connect to a telecommunication network, it will send a connection request message to an access node comprised by the network. This access node is a Radio Base Station, RBS, also known as eNodeB, depending on the technology applied. Upon receipt of such a connection request message, connection configuration parameters are determined by a connection management function for determining specific settings for the (wireless) connection between the UE and the access node.

Such connection configuration parameters may relate to a variety of settings, although they all relate to the physical or logical connection between the UE and the telecommunication network, or more precise between the UE and the access node. Here below, examples of such connection configuration parameters and a short summary of the content of these parameters are provided.

In order to increase capacity in the telecommunication network, an operator may decide to deploy cells on multiple frequency layers, referred to as carriers. Load balancing is a known technique to balance the traffic load between overlaid cells in the network in order to utilize the capacity on the different frequency layers. Connection configuration parameters may therefore comprise load balancing parameters for, for example, indicating the load in each cell, or which cells are overlaid, etc.

Another example of connection configuration parameters relates to carrier aggregation. A UE may be arranged for transmitting and/or receiving data via more than one frequency layer or carrier from the same or a different access node. In case a UE is capable of supporting such functionality, multiple carriers may be aggregated such that the UE is provided with wider transmission bandwidths.

Dual Connectivity is another example of a connection configuration parameter. It enables the establishment of user plane connections via another access node, referred to as a secondary access node, while maintaining higher layer connection management via a master access node. This means that a UE may have user plane connections completely via the master or primary access node, or split between the master access node and the secondary access node.

A further example of a connection configuration parameter is related to unlicensed carrier operation. In case unlicensed carrier operation is applicable, some criteria have to be met in order to co-exist with other (licensed or un-licensed) connections in the same frequency bands. The connection configuration parameters may then be related to these criteria.

An example of deployment of radio base station antennas is via flexible multi-element antennas. These antenna elements can be configured to combine in such a way that the transmitted energy, or receiver sensitivity, becomes directional, i.e. like a beam. The configuration parameters of these multiple-element antennas for creating such a directional beam may be comprised by the connection configuration parameters.

Based on the above, it is clear that complex configurations, i.e. connection configuration parameters, need to be determined by the connection management function once a connection request message from the UE has been received by the access node. Determining these connection configuration parameters may further involve signalling further nodes, for example core telecommunication network nodes, for obtaining connection information to be used for determining the actual connection configuration parameters.

The process of determining these complex configurations is considered to be time consuming, to take up many resources, i.e. increases the load of the telecommunication network, and to be relatively imprecise.

Various aspects of re-connection and connection re-establishment are disclosed in EP1928126A2, EP2373113A1, WO2014/187468A1, WO2013/154387A1, and US2013/260740 A1.

### Summary

The invention is defined by the independent claims. Furthermore, the embodiments of the invention are those defined by the claims. Moreover, examples, aspects and embodiments, which are not covered by the claims are presented not as embodiments of the invention, but as background art or examples useful for understanding the invention. It is an object of the present invention to provide for an improved method of connecting a User Equipment, UE, to a telecommunication network via an access node comprised in the network, such that the process of determining the connection configuration parameters is made more efficient. The access node is a Radio Base Station, RBS, also known as eNodeB, depending on the technology applied.

A first embodiment is a method performed by an access node of connecting a User Equipment, UE, to a telecommunication network via the access node comprised in said network, said method comprising the steps of receiving, by said access node, a connection request from said UE; determining, by said access node, connection configuration parameters for said UE, comprising: checking whether connection configuration parameters for said UE related to a prior connection between said UE and said telecommunication network are available for re-use: and when connection configuration parameters for said UE related to said prior connection between said UE and said telecommunication network are available for re-use, using said available connection configuration parameters as an input for the process of determining connection configuration parameters, wherein said determining connection configuration parameters further comprises: determining said connection configuration parameters based on said available connection configuration parameters, and performance parameters achieved by said connection configuration parameters related to said prior connection between said UE and said telecommunication network and when no connection configuration parameters for said UE related to a prior connection between said UE and said telecommunication network are available for re-use, said step of determining comprises: determining connection configuration parameters for said UE based on available connection configuration parameters between a plurality of UEs and said access node; and connecting, by said access node, said UE to said telecommunication network via said access node by setting up said determined connection configuration parameters for said UE.

In another embodiment the method of connecting a UE to a telecommunication network, further comprises the steps of: upon detection of a released connection between said UE and said telecommunication network via said access node, storing said connection configuration parameters such that said connection configuration parameters are available, for re-use, when said access node receives a further connection request from said UE.

In another embodiment, said step of storing comprises any of: storing, by said UE, said connection configuration parameters in relation to said access node;- storing, by said access node, said connection configuration parameters in relation to said access node and said UE; forwarding, by said access node, said connection configuration parameters to, and storing said connection configuration in relation to said access node and said UE by a control function residing in, a control node comprised in said telecommunication network.

In another embodiment, said connection configuration parameters in relation to said access node are stored by said UE, said method further comprising the step of: providing, by said UE, said connection configuration parameters in relation to said access node, to said access node.

In another embodiment, said connection configuration parameters comprise any of: frequency carrier aggregation configuration via licensed and unlicensed frequency bands; dual connectivity configuration; antenna beam configuration; uplink timing configuration; history of need for and utilization of secondary carriers; geographical information- aggregated frequency bands; aggregated bandwidth, and measurement and feedback configuration.

In another embodiment, said telecommunication network comprises any of an Evolved Packets System, EPS, network, a Universal Mobile Telecommunications System, UMTS, network, a General Packet Radio Service, GPRS, network, a Global System for Mobile Communications, GSM, network and a Long Term Evolution, LTE, network.

Another embodiment relates to an access node arranged for connecting user equipment, UE, to a telecommunication network, said telecommunication network comprising said access node, said access node comprising:- receiving equipment arranged for receiving a connection request from a User Equipment, UE.- determining equipment arranged for determining connection configuration parameters for said UE, at least by:checking whether connection configuration parameters for said UE related to a prior connection between said UE and said telecommunication are available for re-use; and when connection configuration parameters for said UE related to said prior connection between said UE and said telecommunication network are available for re-use, using said available connection configuration parameters as an input for the process of determining connection configuration parameters wherein said determining connection configuration parameters further comprises: determining said connection configuration parameters based on said available connection configuration parameters, and performance parameters achieved by said connection configuration parameters related to said prior connection between said UE and said telecommunication network;and when no connection configuration parameters for said UE related to a prior connection between said UE and said telecommunication network are available for re-use, said step of determining comprises:- determining connection configuration parameters for said UE based on available connection configuration parameters between a plurality of UEs and said access node; and- connecting equipment arranged for connecting said UE to said telecommunication network by setting said determined connection configuration parameters.

In another embodiment, the access node further comprises: detection equipment arranged for detecting a released connection between said UE and said telecommunication network, and-storing equipment arranged for storing said connection configuration parameters, upon detecting of a released connection between said UE and said telecommunication network, such that said connection configuration parameters are available, for re-use, when said access node receives a further connection request from said UE.

In another embodiment, said storing equipment is further arranged for forwarding said connection configuration parameters to a control node comprised in said telecommunication network for storing said connection configuration in relation to said access node and said UE in said control node.

In another embodiment, said connection configuration parameters comprises any of:- frequency carrier aggregation configuration via licensed and unlicensed frequency bands;- dual connectivity configuration;- antenna beam configuration for said access node;- uplink timing configuration;- aggregated frequency bands;- aggregated bandwidth;- history of need for, and utilization of, secondary frequency carrier configuration.

In another embodiment, the receiving equipment comprises receiving module for receiving the connection request from the User Equipment, UE;- the determination equipment comprises determining module for determining connection configuration parameters for said UE;- the connecting equipment comprises connecting module for connecting said UE to said telecommunication network by setting said determined connection configuration parameters.

Another embodiment relates to a non-transitory computer-readable storage medium, comprising instruction which, when executed on at least one processor, cause the at least one processor to carry out the method according to any of the previous embodiments.

Another embodiment relates to a telecommunication network arranged for connecting a User Equipment, UE, to an access node comprised in said network, wherein said access node comprises:- receiving equipment arranged for receiving a connection request from a User Equipment, UE.- determining equipment arranged for determining connection configuration parameters for said UE, at least by:checking whether connection configuration parameters for said UE related to a prior connection between said UE and said telecommunication network are available for re-use; and when connection configuration parameters for said UE related to said prior connection between said UE and said telecommunication network are available for re-use, using said available connection configuration parameters as an input for the process of determining connection configuration parameters wherein said determining connection configuration parameters further comprises: determining said connection configuration parameters based on said available connection configuration parameters, and performance parameters achieved by said connection configuration parameters related to said prior connection between said UE and said telecommunication network;andwhen no connection configuration parameters for said UE related to a prior connection between said UE and said telecommunication network are available for re-use, said step of determining comprises:- determining connection configuration parameters for said UE based on available connection configuration parameters between a plurality of UEs and said access node; and- connecting equipment arranged for connecting said UE to said telecommunication network by setting said determined connection configuration parameters.

### Brief description of the drawings

Figure 1 is a schematic diagram illustrating an embodiment of the method steps;
Figure 2 is a schematic diagram illustrating an embodiment of the network;
Figure 3 is a schematic diagram illustrating an embodiment of the network;
Figure 4 is a signalling diagram illustrating an exchange of signals in an embodiment of the method;
Figure 5 is a signalling diagram illustrating an exchange of signals in an embodiment of the method;
Figure 6 is a signalling diagram illustrating an exchange of signals in an embodiment of the method;
Figure 7 is a block diagram illustrating an embodiment of an access node;
Figure 8 is a flow chart illustrating an embodiment of method steps;
Figure 9 is a block diagram illustrating an embodiment of a User Equipment.

### Detailed description

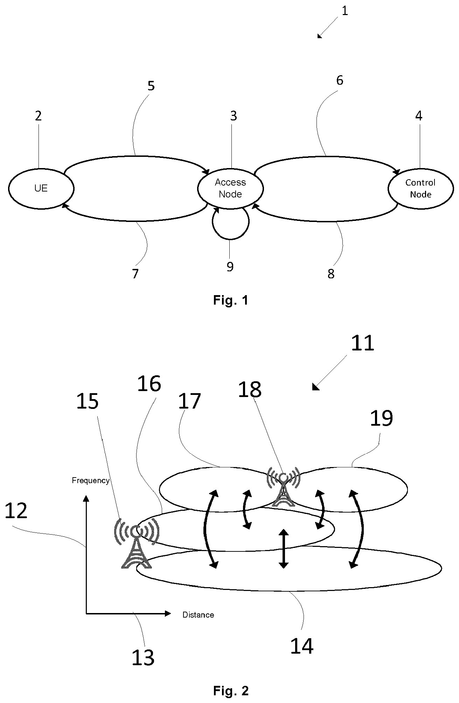

**Figure 1** is a schematic diagram 1 illustrating an embodiment of the method steps. Here, a User Equipment, UE 2, intends to connect to a telecommunication network comprising at least an access node 3. The network may further comprise a control node 4. This access node 3 is a Radio Base Station, RBS, also known as eNodeB, eNB, depending on the technology applied.

The UE 2 transmits 5 a connection request message towards an access node 3 comprised in the telecommunication network. The access node 3 may be any of a radio base station or an eNodeB, or may comprise a control function providing functionality of a mobility management entity and an access network discovery and selection function server. Upon receipt of the connection request message, the access node needs to determine whether the UE 2 is allowed to gain access to the telecommunication network, and, if so, needs to determine and set connection configuration parameters for the UE 2.

These connection configuration parameters may relate to the wireless connection between the UE 2 and the access node 3, for example Physical layer parameters, Medium Access Layer, MAC, parameters or the like.

In order to determine these connection configuration parameters for the UE 2, the access node 3 informs 6 or requests a control function, located in e.g. the control node 4 whether connection configuration parameters related to a prior connection between that specific UE 2 and the same telecommunication network are already available. These connection configuration parameters may have been stored previously, by the control node, once it had been detected that the prior connection between the UE 2 and the telecommunication network had been released.

The access node 3 may provide the control node 4 with the International Mobile Subscriber Identity, IMSI, of the UE, or any other unique identifier for uniquely identifying the UE 2. Based on the provided identifier, the control node 3 is able to uniquely retrieve the associated connection configuration parameters for that UE 2, for example, from a database comprised in an internal memory of the control node 4. The retrieved connection configuration parameters may then be transmitted 8 to the access node 3.

The access node 3 will then, subsequently, determine and set the connection configuration parameters for the UE 2 based on the received available connection configuration parameter from the control node 4, and based on auxiliary information.

The auxiliary information may be directed to the accuracy, validity of the available connection configuration parameters for re-use, and may comprise performance parameters achieved by said connection configuration parameters related to said prior connection between said UE and said telecommunication network, load situation at different carriers, and present geographical information of said UE and geographical information of said UE during said prior connection between said UE and said telecommunication network.

Finally, the access node 3 transmits 7 a connection accept message to the UE 2, possibly comprising at least a subset of the determined connection configuration parameters, such that the UE 2 is able to set its device accordingly.

**Figure 2** is a schematic diagram 11 of radio base stations having overlapping cells 14, 16, 17, 19, wherein each cell is operative in a different frequency band / frequency layer. The vertical axis 12 indicates the frequency of the cells, and the horizontal axis 13 indicates the available distance of the different cells.

Here, each access node 15, 18, for example an evolved UMTS Terrestrial Radio Access Netowrk, E-UTRAN, eNodeB in an Long Term Evolution, LTE, telecommunication network, serves cells 14, 16, 17, 19 which may or may not overlap with each other. In the present example, the access nodes shown in figure 2, i.e. access nodes having reference numeral 15 and 18, respecitvely, are embodiments or specific implementations of the access node shown in figure 1 indicated with reference numeral 3.

Load balancing, being one of the connection configuration parameters for the UE 2, is a technique to balance the traffic load between the overlapping cells 14, 16, 17, 19 in the telecommunication network in order to utilize the capacity on the different frequency layers. Potential opportunities for load balancing are illustrated with arrows between the different cells 14, 16, 17, 19.

In order to perform load balancing, each access node 15, 18 assesses the traffic load in its cells 14, 16, 17, 19. The traffic load information is then exchanged between the cells, after which a load balancing algorithm identifies whether there is a need to handover UE's between the cells 14, 16, 17, 19 in order to balance the traffic load of each of the cells 14, 16, 17, 19. In case there is a need to handover UE's in order to balance the traffic load, the UE's are selected and ordered to a different cell in a known way.

Load balancing is thus a technique which the access nodes 15, 18, for example eNodeB's, can use to balance the traffic load in its cells 14, 16, 17, 19. A UE, requesting a particular service, can be ordered to a different cell, by any of the access nodes 14, 16, 17, 19, in case that different cell is also capable of providing that particular service to the UE. The different cell may be provided by the same access node, or by another access node, as long as the UE is covered by that different cell.

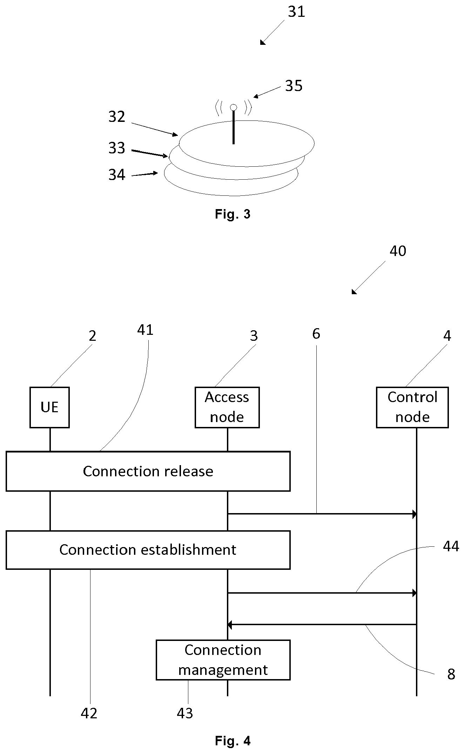

**Figure 3** is a schematic diagram 31 of cells 32, 33, 34 having approximately the same coverage area but deploying different frequencies. As mentioned before, a UE may be arranged to transmit and/or receive data via more than one frequency layer from the same access node 35.

In the present example, the access node shown in figure 3, i.e. access node having reference numeral 35 is an embodiment or a specific implementation of the access node shown in figure 1 indicated with reference numeral 3.

It is possible to deploy several cells 32, 33, 34 with approximately the same coverage area in case multiple frequency layers are available to the access node 35. Each of the multiple frequency layers are, in the art, referenced to as Component Carriers, CC.

Carrier Aggregation, CA, being information comprised by the connection configuration parameters, two or more of such Component Carriers are aggregated in order to support wider transmission bandwidths for the UE. The UE may then simultaneously receive or transmit on one or multiple Component Carriers depending on the capability of the UE.

It is, for example, possible to configure a UE to aggregate a different number of Component Carriers originating from the same access node 35 and of possibly different bandwidths in the uplink and the downlink. The number of download and upload component carriers than can be configured depends on the download and upload aggregation capabilities of the UE and of the telecommunication network.

UE's capable of handling component carriers can indicate their capability to the access node 35 via Radio Resource Control, RRC, signalling, for example using a RRCConnectionReconfiguration message.

**Figure 4** is a signalling diagram 40 illustrating an exchange of signals in an embodiment of the method.

The nature of the access node 3, and the mechanisms associated to the storage and retrieval of the connection configuration parameters are different in various embodiments.

In the embodiment shown in Figure 4, the connection configuration parameters are stored in a network node different from the access node 3. The connection configuration parameters are stored in a control node 4, for example a Mobility Management Entity, MME.

Upon detection that the connection has been released 41 between the UE 2 and the access node 3, for example actively released or lost by an error situation or the like, the connection configuration parameters of the UE 2 are to be stored, such that these parameters can be made available the next time the same UE 2 intends to connect to the telecommunication network.

Hereto, the access node 3 forwards 6 the connection configuration parameters, along with a unique identity of the UE 2, to a control node 4 comprised in the telecommunication network. The control node can be a MME arranged for storing connection configuration parameters of a plurality of UE's. The control node 4 may then store the connection configuration parameters, along with the unique identity of the UE 2, as well as a unique identifier of the serving access node 3.

At a later time instant, the UE 2 attempts to establish 42 a connection with the same access node 3, for example via a request message. The access node 3 then checks whether connection configuration parameters for that UE 2 are available, by requesting 44 these parameters at the control node. The request is accompanied with the unique identity of the UE 2, for example its IMSI.

Based on the received request 44, the control node retrieves the stored connection configuration parameters, and provides 8 these parameters to the access node 3. A connection management function 43 is then able to determine the exact connection configuration parameters based on the received, available, connection configuration parameters for that UE 2.

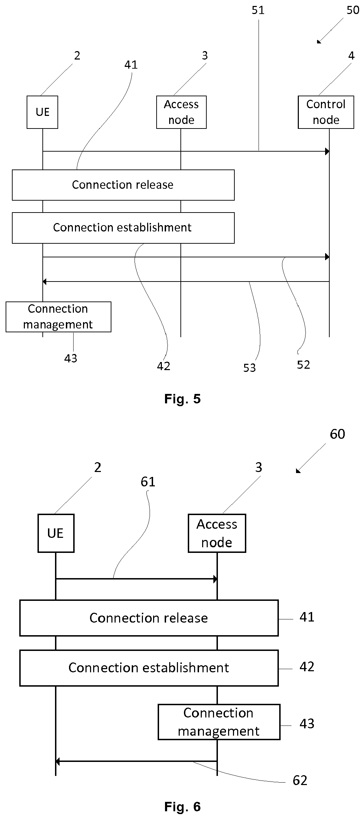

**Figure 5** is a signalling diagram 50 illustrating an exchange of signals in an embodiment of the method.

In this embodiment, the connection configuration parameters are stored in a network node different from the access node 3. The parameters are stored in the control node 4. The exchange of connection configuration parameters is thus between the UE 2 and the control node 4, via access node 3.

One example of such a control node, in the present example, is an Access Network Discovery and Selection Function Server, ANDSF server, which manages policies regarding how a UE 2 establishes connections and access to other radio access technologies such as WiFi. In such cases, the connection management 43 may be incorporated in the UE 2, supported by the control node 4.

Here, upon detection, by the UE 2, of a released connection 51, or just before actively releasing the connection, between said UE 2 and said telecommunication network via said access node 3, the connection configuration parameters are provided to the control node 4, by the UE 2 via access node 3. This will make sure that the most recent connection configuration parameters are made available to the control node 4.

Upon reconnection of the UE 2 to the same telecommunication network, for example via the same access node 3, using the block connection establishment 42, according to the present invention, it is checked whether connection configuration parameters for that UE 2 are already available in the ANDSF server in the telecommunication network.

To this end, the UE 2 signals 52 the control node 4 to request for the stored connection configuration parameters, and the control node 4 provides 53 said connection configuration parameters based on the request. In the present case, the connection management function 43 resides in the UE 2, which is then further supported by the access node 3.

**Figure 6** is a signalling diagram 60 illustrating an exchange of signals in an embodiment of the method.

In this embodiment, the access node 3 is the node that stores the connection configuration parameters. The access node 3 is a radio base station, for example an eNodeB, and it then also comprises functionality of a Mobility Management Entity, MME, or an Access Network Discovery and Selection Function Server, ANDSF-server.

Optionally, the UE will send 61 the connection configuration parameters to the access node 3 just before the connection is released 41. This step may not be required in case actual connection configuration parameter of the UE are already available to the access node 3.

When the UE 2 reconnects, or re-establishes the connection, i.e. in the connection establishment block 42, the connection management function 43 will retrieve or obtain the connection configuration parameters and use the information for connection management, which may comprise signalling 62 the connection configuration parameters to the UE 2.

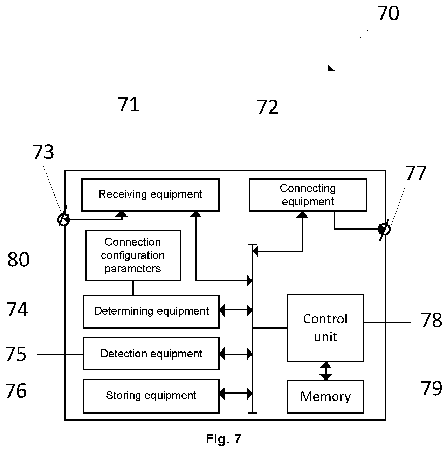

**Figure 7** is a block diagram illustrating an embodiment of an access node 3 arranged for connecting UE to a telecommunication network, wherein the telecommunication network comprises the access node 3.

The access node 3 comprises a control unit 78 and a memory 79, which control unit 78 is connected to a storing equipment 76, a detection equipment 75, a determining equipment 74, receiving equipment 71 and connecting equipment 72.

Incoming data packets or messages pass through the input terminal 73 before they reach the receiving equipment 71, or a receiving module. Outgoing data packets or messages pass or are sent by the connecting equipment 72, or a connecting module, via the output terminal 77, for example towards a UE 2, or a control node 4.

The receiving equipment 71 is arranged for receiving a connection request from a UE 2. The connection request may be a request message for access to the telecommunication network or the like, or may be a reconnection request message for reconnection to the same telecommunication network in case of a released or lost connection.

The determining equipment 74 is arranged for determining connection configuration parameters for the UE that intends to connect to the telecommunication network, at least by checking whether connection configuration parameters 80 for said UE 2 related to a prior connection between said UE 2 and said telecommunication are available for re-use.

The access node 3 further comprises connecting equipment 72 arranged for connecting 84 said UE 2 to said telecommunication network by setting said determined connection configuration parameters 80 for said UE 2.

In a more detailed example, the access node 3 further comprises detection equipment 75 arranged for detecting a released connection between said UE 2 and said telecommunication network, and storing equipment 76 arranged for storing 85 said connection configuration parameters 80, upon detecting of a released connection between said UE 2 and said telecommunication network, such that said connection configuration parameters 80 are available, for re-use, when said access node 3 receives a further connection request from said UE 2.

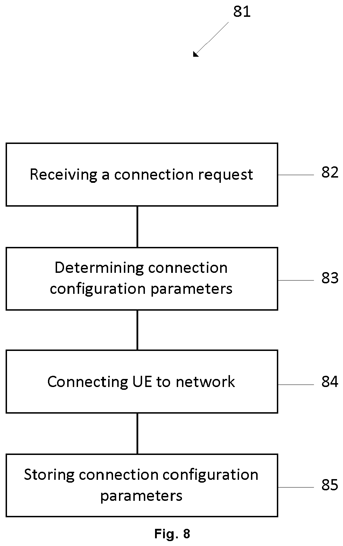

**Figure 8** is a flow chart 81 illustrating an embodiment of method steps.

The method steps comprise:
- receiving 82, by said access node 3, a connection request from said UE 2;
- determining 83, by said access node 3, connection configuration parameters 80 for said UE 2, comprising checking whether connection configuration parameters 80 for said UE 2 related to a prior connection between said UE 2 and said telecommunication network are available for re-use;
- connecting 84, by said access node 3, said UE 2 to said telecommunication network via said access node 3 by setting up said determined connection configuration parameters 80 for said UE 2, and
- storing 85, said connection configuration parameters in said telecommunication network.

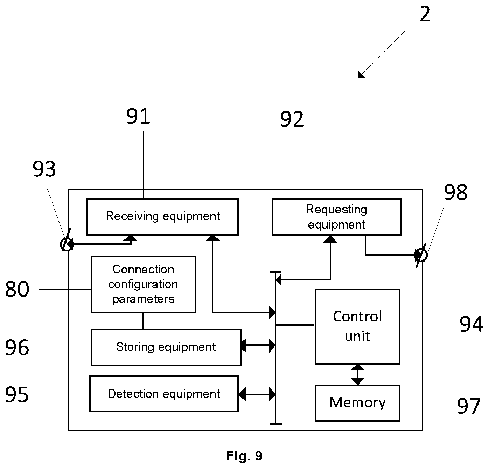

**Figure 9** is a block diagram illustrating an embodiment of a User Equipment, UE, 2 arranged for requesting reconnection to a telecommunication network via an access node comprised in the network, wherein the UE (2) is connected to the access node (3) by set connection configuration parameters (80).

The UE 2 comprises a control unit 94 and a memory 97, which control unit 94 is connected to a storing equipment 96, a detection equipment 95, a receiving equipment 91 and a requesting equipment 92.

Incoming data packets or messages pass through the input terminal 93 before they reach the receiving equipment 91, or a receiving module. Outgoing data packets or messages pass or are sent by the requesting equipment 92, or a requesting module, via the output terminal 98

The detection equipment (95) is arranged for detecting a released connection between said UE (2) and said telecommunication network via said access node (3), the storing equipment (96) is arranged for storing (85) said connection configuration parameters (80), upon detecting of a released connection between said UE (2) and said telecommunication network, and the requesting equipment (92) is arranged for requesting reconnection to said telecommunication network via said access node (3) by providing said access node (3) with said stored connection configuration parameters (80).

The core essence of the present invention is that connection configuration parameters for a UE, such as the configuration of primary carriers, secondary carriers, dual connectivity configurations, antenna beam configurations etc. can be maintained between different sessions relating to the same UE. This is achieved by, in an embodiment, storing the connection configuration parameters of the UE and making the connection configuration parameters available the next time the UE connects to the same telecommunication network.

Alternatively, parameters of a stored session of a particular UE can be used for other access requesting UEs having the same capability requirements.

An advantage of the present invention is that the connection configuration parameters are made available when the UE re-connects, and it allows the connection management functionality to re-use these parameters, for example, as a default configuration.

For a UE connecting for the first time, the history of other UEs, i.e. the available connection configuration parameters for other UEs, could be used as an initial estimate for suitable connection configuration parameters for the UE connecting for the first time.

In this way, the load that carrier aggregation usage and dual connectivity usage will introduce becomes more stable in cells and in access nodes It also makes processing more efficient in terms of signalling, CPU processing and simply in processing time as, for example, less combinations of load balancing, carrier aggregation and dual connectivity alternatives needs to be processed.

Reducing such alternatives are for example valuable when it comes to determining suitable secondary cell(s) and access node cell group(s) from coverage perspective since that typically involves measurements by the UE. Such measurements in turn involve signalling, potential need for measurement gaps, delays in taking connection management decisions etc.

All above benefits becomes even more valuable as UEs and telecommunication networks become more capable of carrier aggregation and dual connectivity in the near future, thereby increasing complexity of (re)-attachments.

Similar benefits can also be obtained by making use of the antenna beam configuration in this manner. Communication via antenna beams exploits the spatial dimension in the network, and the spatial conditions are likely to be similar for two consecutive sessions with the same UE.

The present invention is not limited to the embodiments as disclosed above, and can be modified and enhanced by those skilled in the art within the scope of the present invention as disclosed in the appended claims without having to apply inventive skills.

## Claims

1. Method performed by an access node (3) of connecting a User Equipment, UE (2), to a telecommunication network via the access node (3) comprised in said network, said method comprising the steps of:
- receiving (82), by said access node (3), a connection request from said UE (2);
- determining (9, 83), by said access node (3), connection configuration parameters (80) for said UE (2), comprising:
checking whether connection configuration parameters (80) for said UE (2) related to a prior connection between said UE (2) and said telecommunication network are available for re-use; and
when connection configuration parameters (80) for said UE (2) related to said prior connection between said UE (2) and said telecommunication network are available for re-use, using said available connection configuration parameters (80) as an input for the process of determining connection configuration parameters (80), wherein said determining connection configuration parameters (80) further comprises: determining (9, 83) said connection configuration parameters (80) based on said available connection configuration parameters (80), and performance parameters achieved by said connection configuration parameters related to said prior connection between said UE (2) and said telecommunication network; and
- when no connection configuration parameters (80) for said UE (2) related to a prior connection between said UE (2) and said telecommunication network are available for re-use, said step of determining (9, 83) comprises:
- determining (9, 83) connection configuration parameters (80) for said UE (2) based on available connection configuration parameters (80) between a plurality of UEs and said access node (3); and
- connecting (84), by said access node (3), said UE (2) to said telecommunication network via said access node (3) by setting up said determined connection configuration parameters (80) for said UE (2).

2. Method of connecting a UE (2) to a telecommunication network according to claim 1, further comprising the step of:
- upon detection of a released connection between said UE (2) and said telecommunication network via said access node (3), storing (85) said connection configuration parameters (80) such that said connection configuration parameters (80) are available, for re-use, when said access node (3) receives a further connection request from said UE (2).

3. Method of connecting a UE (2) to a telecommunication network according to claim 2, wherein said step of storing comprises any of:
- storing (85), by said UE (2), said connection configuration parameters (80) in relation to said access node (3);
- storing (85), by said access node (3), said connection configuration parameters (80) in relation to said access node (3) and said UE (2);
- forwarding, by said access node (3), said connection configuration parameters (80) to, and storing (85) said connection configuration in relation to said access node (3) and said UE (2) by a control function residing in, a control node (4) comprised in said telecommunication network.

4. Method of connecting a UE (2) to a telecommunication network according to claim 3, wherein said connection configuration parameters (80) in relation to said access node (3) are stored by said UE (2), said method further comprising the step of:
- providing, by said UE (2), said connection configuration parameters (80) in relation to said access node (3), to said access node (3).

5. Method of connecting a UE (2) to a telecommunication network according to any of the previous claims, wherein said connection configuration parameters (80) comprise any of:
- frequency carrier aggregation configuration via licensed and unlicensed frequency bands;
- dual connectivity configuration;
- antenna beam configuration;
- uplink timing configuration;
- history of need for and utilization of secondary carriers;
- geographical information
- aggregated frequency bands;
- aggregated bandwidth, and
- measurement and feedback configuration.

6. Method of connecting a UE (2) to a telecommunication network according to any of the previous claims, wherein said telecommunication network comprises any of an Evolved Packets System, EPS, network, a Universal Mobile Telecommunications System, UMTS, network, a General Packet Radio Service, GPRS, network, a Global System for Mobile Communications, GSM, network and a Long Term Evolution, LTE, network.

7. Access node arranged for connecting user equipment, UE (2), to a telecommunication network, said telecommunication network comprising said access node (3), said access node (3) comprising:
- receiving equipment (71) arranged for receiving (82) a connection request from a User Equipment, UE (2).
- determining equipment (74) arranged for determining (9, 83) connection configuration parameters (80) for said UE (2), at least by:
checking whether connection configuration parameters (80) for said UE (2) related to a prior connection between said UE (2) and said telecommunication are available for re-use; and
when connection configuration parameters (80) for said UE (2) related to said prior connection between said UE (2) and said telecommunication network are available for re-use, using said available connection configuration parameters (80) as an input for the process of determining connection configuration parameters (80) wherein said determining connection configuration parameters (80) further comprises: determining (9, 83) said connection configuration parameters (80) based on said available connection configuration parameters (80), and performance parameters achieved by said connection configuration parameters related to said prior connection between said UE (2) and said telecommunication network;and
when no connection configuration parameters (80) for said UE (2) related to a prior connection between said UE (2) and said telecommunication network are available for re-use, said step of determining (9, 83) comprises:
- determining (9, 83) connection configuration parameters (80) for said UE (2) based on available connection configuration parameters (80) between a plurality of UEs and said access node (3); and
- connecting equipment (72) arranged for connecting (84) said UE (2) to said telecommunication network by setting said determined connection configuration parameters (80).

8. Access node according to claim 7, further comprising:
- detection equipment (75) arranged for detecting a released connection between said UE (2) and said telecommunication network, and
- storing equipment (76) arranged for storing (85) said connection configuration parameters (80), upon detecting of a released connection between said UE (2) and said telecommunication network, such that said connection configuration parameters (80) are available, for re-use, when said access node (3) receives a further connection request from said UE (2).

9. Access node according to claim 8, wherein said storing equipment (76) is further arranged for forwarding said connection configuration parameters (80) to a control node (4) comprised in said telecommunication network for storing (85) said connection configuration in relation to said access node (3) and said UE (2) in said control node (4).

10. Access node according to any of the claims 7 - 9, wherein said connection configuration parameters (80) comprises any of:
- frequency carrier aggregation configuration via licensed and unlicensed frequency bands;
- dual connectivity configuration;
- antenna beam configuration for said access node (3);
- uplink timing configuration;
- aggregated frequency bands;
- aggregated bandwidth;
- history of need for, and utilization of, secondary frequency carrier configuration.

11. Access node according to any of claims 7-10, wherein:
- the receiving equipment comprises receiving module for receiving (82) the connection request from the User Equipment, UE (2);
- the determination equipment comprises determining module for determining (9, 83) connection configuration parameters (80) for said UE (2);
- the connecting equipment comprises connecting module for connecting (84) said UE (2) to said telecommunication network by setting said determined connection configuration parameters (80).

12. A non-transitory computer-readable storage medium, comprising instruction which, when executed on at least one processor, cause the at least one processor to carry out the method according to any of the claims 1 - 6.

13. Telecommunication network arranged for connecting a User Equipment, UE (2), to an access node (3) comprised in said network, wherein said access node (3) comprises:
- receiving equipment (71) arranged for receiving (82) a connection request from a User Equipment, UE (2).
- determining equipment (74) arranged for determining (9, 83) connection configuration parameters (80) for said UE (2), at least by:
checking whether connection configuration parameters (80) for said UE (2) related to a prior connection between said UE (2) and said telecommunication network are available for re-use; and when connection configuration parameters (80) for said UE (2) related to said prior connection between said UE (2) and said telecommunication network are available for re-use, using said available connection configuration parameters (80) as an input for the process of determining connection configuration parameters (80) wherein said determining connection configuration parameters (80) further comprises: determining (9, 83) said connection configuration parameters (80) based on said available connection configuration parameters (80), and performance parameters achieved by said connection configuration parameters related to said prior connection between said UE (2) and said telecommunication network;and
when no connection configuration parameters (80) for said UE (2) related to a prior connection between said UE (2) and said telecommunication network are available for re-use, said step of determining (9, 83) comprises:
- determining (9, 83) connection configuration parameters (80) for said UE (2) based on available connection configuration parameters (80) between a plurality of UEs and said access node (3); and
- connecting equipment (72) arranged for connecting (84) said UE (2) to said telecommunication network by setting said determined connection configuration parameters (80).

## Patentansprüche

1. Verfahren, das von einem Zugriffsknoten (3) zum Verbinden einer Benutzervorrichtung (User Equipment, UE) (2) mit einem Telekommunikationsnetzwerk über den Zugriffsknoten (3) durchgeführt wird, der in dem Netzwerk enthalten ist; wobei das Verfahren folgende Schritte umfasst:
- Empfangen (82), durch den Zugriffsknoten (3), einer Verbindungsanforderung von der UE (2);
- Bestimmen (9, 83), durch den Zugriffsknoten (3), von Verbindungskonfigurationsparametern (80) für die UE (2), umfassend:
Überprüfen, ob Verbindungskonfigurationsparameter (80) für die UE (2), die sich auf eine vorherige Verbindung zwischen der UE (2) und dem Telekommunikationsnetzwerk beziehen, zur Wiederverwendung verfügbar sind; und
wenn Verbindungskonfigurationsparameter (80) für die UE (2), die sich auf die vorherige Verbindung zwischen der UE (2) und dem Telekommunikationsnetzwerk beziehen, zur Wiederverwendung verfügbar sind, Verwenden der verfügbaren Verbindungskonfigurationsparameter (80) als Eingabe für den Prozess zum Bestimmen der Verbindungskonfigurationsparameter (80), wobei die bestimmenden Verbindungskonfigurationsparameter (80) ferner Folgendes umfassen: Bestimmen (9, 83) der Verbindungskonfigurationsparameter (80) basierend auf den verfügbaren Verbindungskonfigurationsparametern (80), und der Leistungsparameter, die durch die Verbindungskonfigurationsparameter erreicht werden, die sich auf die vorherige Verbindung zwischen der UE (2) und dem Telekommunikationsnetzwerk beziehen; und
- wenn keine Verbindungskonfigurationsparameter (80) für die UE (2), die sich auf eine vorherige Verbindung zwischen der UE (2) und dem Telekommunikationsnetzwerk beziehen, zur Wiederverwendung verfügbar sind, umfasst der Schritt des Bestimmens (9, 83) Folgendes:
- Bestimmen (9, 83) von Verbindungskonfigurationsparametern (80) für die UE (2) basierend auf verfügbaren Verbindungskonfigurationsparametern (80) zwischen mehreren UEs und dem Zugriffsknoten (3); und
- Verbinden (84), durch den Zugriffsknoten (3), der UE (2) mit dem Telekommunikationsnetzwerk über den Zugriffsknoten (3) durch Einrichten der bestimmten Verbindungskonfigurationsparameter (80) für die UE (2).

2. Verfahren zum Verbinden einer UE (2) mit einem Telekommunikationsnetzwerk nach Anspruch 1, das ferner folgenden Schritt umfasst:
- beim Erkennen einer freigegebenen Verbindung zwischen der UE (2) und dem Telekommunikationsnetzwerk über den Zugriffsknoten (3), Speichern (85) der Verbindungskonfigurationsparameter (80), so dass die Verbindungskonfigurationsparameter (80) zur Wiederverwendung verfügbar sind, wenn der Zugriffsknoten (3) eine weitere Verbindungsanforderung von der UE (2) empfängt.

3. Verfahren zum Verbinden einer UE (2) mit einem Telekommunikationsnetzwerk nach Anspruch 2, wobei der Schritt des Speicherns eines der Folgenden umfasst:
- Speichern (85), durch die UE (2), der Verbindungskonfigurationsparameter (80) in Bezug auf den Zugriffsknoten (3);
- Speichern (85), durch den Zugriffsknoten (3), der Verbindungskonfigurationsparameter (80) in Bezug auf den Zugriffsknoten (3) und die UE (2);
- Weiterleiten, durch den Zugriffsknoten (3), der Verbindungskonfigurationsparameter (80) an einen Steuerknoten (4), der in dem Telekommunikationsnetzwerk enthalten ist, und Speichern (85) der Verbindungskonfiguration in Bezug auf den Zugriffsknoten (3) und die UE (2) durch eine Steuerfunktion, die sich in einem Steuerknoten (4) befindet, der in dem Telekommunikationsnetzwerk enthalten ist.

4. Verfahren zum Verbinden einer UE (2) mit einem Telekommunikationsnetzwerk nach Anspruch 3, wobei die Verbindungskonfigurationsparameter (80) in Bezug auf den Zugriffsknoten (3) von der UE (2) gespeichert werden, wobei das Verfahren ferner folgenden Schritt umfasst:
- Bereitstellen, durch die UE (2), der Verbindungskonfigurationsparameter (80) in Bezug auf den Zugriffsknoten (3) an den Zugriffsknoten (3).

5. Verfahren zum Verbinden einer UE (2) mit einem Telekommunikationsnetzwerk nach einem der vorhergehenden Ansprüche, wobei die Verbindungskonfigurationsparameter (80) Folgendes umfassen:
- Konfiguration der Frequenzträgeraggregation über lizenzierte und nicht lizenzierte Frequenzbänder;
- Konfiguration mit doppelter Konnektivität;
- Antennenstrahlkonfiguration;
- Uplink-Timing-Konfiguration;
- Geschichte der Notwendigkeit und Nutzung von Sekundärträgern;
- geografische Informationen
- aggregierte Frequenzbänder;
- aggregierte Bandbreite und
- Mess- und Rückkopplungskonfiguration.

6. Verfahren zum Verbinden einer UE (2) mit einem Telekommunikationsnetzwerk nach einem der vorhergehenden Ansprüche, wobei das Telekommunikationsnetzwerk ein beliebiges entwickeltes Paketsystem- (Evolved Packets System, EPS) Netzwerk, ein universelles Mobiltelekommunikationssystem-(Universal Mobile Telecommunications System, UMTS) Netzwerk, ein allgemeines Paketfunkdienst- (General Packet Radio Service, GPRS) Netzwerk, ein Netzwerk eines globalen Systems für Mobilkommunikation- (Global System for Mobile Communications, GSM) und ein Langzeitevolutions- (Long Term Evolution, LTE) Netzwerk umfasst.

7. Zugriffsknoten zum Verbinden der Benutzereinrichtung UE (2) mit einem Telekommunikationsnetz, wobei das Telekommunikationsnetzwerk den Zugriffsknoten (3) umfasst, wobei der Zugriffsknoten (3) Folgendes umfasst:
- eine Empfangseinrichtung (71) zum Empfangen (82) einer Verbindungsanforderung von einer Benutzereinrichtung, UE, (2),
- eine Bestimmungseinrichtung (74) zum Bestimmen (9, 83) der Verbindungskonfigurationsparameter (80) für die UE (2), zumindest durch Folgendes:
Überprüfen, ob Verbindungskonfigurationsparameter (80) für die UE (2), die sich auf eine vorherige Verbindung zwischen der UE (2) und der Telekommunikation beziehen, zur Wiederverwendung verfügbar sind; und
wenn Verbindungskonfigurationsparameter (80) für die UE (2), die sich auf die vorherige Verbindung zwischen der UE (2) und dem Telekommunikationsnetzwerk beziehen, zur Wiederverwendung verfügbar sind, Verwenden der verfügbaren Verbindungskonfigurationsparameter (80) als Eingabe für den Prozess zum Bestimmen der Verbindungskonfigurationsparameter (80), wobei die bestimmenden Verbindungskonfigurationsparameter (80) ferner Folgendes umfassen: Bestimmen (9, 83) der Verbindungskonfigurationsparameter (80) basierend auf den verfügbaren Verbindungskonfigurationsparametern (80), und der Leistungsparameter, die durch die Verbindungskonfigurationsparameter erreicht werden, die sich auf die vorherige Verbindung zwischen der UE (2) und dem Telekommunikationsnetzwerk beziehen; und
wenn keine Verbindungskonfigurationsparameter (80) für die UE (2), die sich auf eine vorherige Verbindung zwischen der UE (2) und dem Telekommunikationsnetzwerk beziehen, zur Wiederverwendung verfügbar sind, umfasst der Schritt des Bestimmens (9, 83) Folgendes:
- Bestimmen (9, 83) von Verbindungskonfigurationsparametern (80) für die UE (2) basierend auf verfügbaren Verbindungskonfigurationsparametern (80) zwischen mehreren UEs und dem Zugriffsknoten (3); und
- einer Verbindungseinrichtung (72) zum Verbinden (84) der UE (2) mit dem Telekommunikationsnetzwerk durch Einstellen der bestimmten Verbindungskonfigurationsparameter (80).

8. Zugriffsknoten nach Anspruch 7, der ferner Folgendes umfasst:
- eine Erfassungseinrichtung (75), die zum Erfassen einer freigegebenen Verbindung zwischen der UE (2) und dem Telekommunikationsnetzwerk ausgelegt ist, und
- eine Speichereinrichtung (76) zum Speichern (85) der Verbindungskonfigurationsparameter (80) nach Erfassen einer freigegebenen Verbindung zwischen der UE (2) und dem Telekommunikationsnetz, so dass die Verbindungskonfigurationsparameter (80) zur Wiederverwendung verfügbar sind, wenn der Zugriffsknoten (3) eine weitere Verbindungsanforderung von der UE (2) empfängt.

9. Zugriffsknoten nach Anspruch 8, wobei die Speichereinrichtung (76) ferner dafür ausgelegt ist, die Verbindungskonfigurationsparameter (80) an einen Steuerknoten (4) weiterzuleiten, der in dem Telekommunikationsnetzwerk enthalten ist, zum Speichern (85) der Verbindungskonfiguration in Bezug auf den Zugriffsknoten (3) und die UE (2) im Steuerknoten (4).

10. Zugriffsknoten nach einem der Ansprüche 7 bis 9, wobei die Verbindungskonfigurationsparameter (80) Folgendes umfassen:
- Konfiguration der Frequenzträgeraggregation über lizenzierte und nicht lizenzierte Frequenzbänder;
- Konfiguration mit doppelter Konnektivität;
- Antennenstrahlkonfiguration für den Zugriffsknoten (3);
- Uplink-Timing-Konfiguration;
- aggregierte Frequenzbänder;
- aggregierte Bandbreite;
- Geschichte der Notwendigkeit und Nutzung der Sekundärfrequenzträgerkonfiguration.

11. Zugriffsknoten nach einem der Ansprüche 7 bis 10, wobei:
- die Empfangseinrichtung ein Empfangsmodul zum Empfangen (82) der Verbindungsanforderung von der Benutzereinrichtung, UE, (2) umfasst;
- die Bestimmungseinrichtung ein Bestimmungsmodul zum Bestimmen (9, 83) der Verbindungskonfigurationsparameter (80) für die UE (2) umfasst;
- die Verbindungseinrichtung ein Verbindungsmodul zum Verbinden (84) der UE (2) mit dem Telekommunikationsnetzwerk durch Einstellen der bestimmten Verbindungskonfigurationsparameter (80) umfasst.

12. Nicht flüchtiges computerlesbares Speichermedium, das einen Befehl umfasst, der, wenn er auf mindestens einem Prozessor ausgeführt wird, den mindestens einen Prozessor veranlasst, das Verfahren nach einem der Ansprüche 1 bis 6 auszuführen.

13. Telekommunikationsnetz, das zum Verbinden einer Benutzervorrichtung UE (2) mit einem Zugriffsknoten (3) angeordnet ist, der in dem Netzwerk enthalten ist, wobei der Zugriffsknoten (3) Folgendes umfasst:
- eine Empfangseinrichtung (71) zum Empfangen (82) einer Verbindungsanforderung von einer Benutzereinrichtung, UE, (2),
- eine Bestimmungseinrichtung (74) zum Bestimmen (9, 83) der Verbindungskonfigurationsparameter (80) für die UE (2), zumindest durch Folgendes:
Überprüfen, ob Verbindungskonfigurationsparameter (80) für die UE (2), die sich auf eine vorherige Verbindung zwischen der UE (2) und dem Telekommunikationsnetzwerk beziehen, zur Wiederverwendung verfügbar sind; und wenn Verbindungskonfigurationsparameter (80) für die UE (2), die sich auf die vorherige Verbindung zwischen der UE (2) und dem Telekommunikationsnetzwerk beziehen, zur Wiederverwendung verfügbar sind, Verwenden der verfügbaren Verbindungskonfigurationsparameter (80) als Eingabe für den Prozess zum Bestimmen der Verbindungskonfigurationsparameter (80), wobei die bestimmenden Verbindungskonfigurationsparameter (80) ferner Folgendes umfassen: Bestimmen (9, 83) der Verbindungskonfigurationsparameter (80) basierend auf den verfügbaren Verbindungskonfigurationsparametern (80), und der Leistungsparameter, die durch die Verbindungskonfigurationsparameter erreicht werden, die sich auf die vorherige Verbindung zwischen der UE (2) und dem Telekommunikationsnetzwerk beziehen; und
wenn keine Verbindungskonfigurationsparameter (80) für die UE (2), die sich auf eine vorherige Verbindung zwischen der UE (2) und dem Telekommunikationsnetzwerk beziehen, zur Wiederverwendung verfügbar sind, umfasst der Schritt des Bestimmens (9, 83) Folgendes:
- Bestimmen (9, 83) von Verbindungskonfigurationsparametern (80) für die UE (2) basierend auf verfügbaren Verbindungskonfigurationsparametern (80) zwischen mehreren UEs und dem Zugriffsknoten (3); und
- einer Verbindungseinrichtung (72) zum Verbinden (84) der UE (2) mit dem Telekommunikationsnetzwerk durch Einstellen der bestimmten Verbindungskonfigurationsparameter (80).

## Revendications

1. Procédé réalisé par un nœud d'accès (3) pour connecter un équipement utilisateur, UE (2), à un réseau de télécommunication via le nœud d'accès (3) compris dans ledit réseau, ledit procédé comprenant les étapes consistant à :
- recevoir (82), par ledit nœud d'accès (3), une demande de connexion provenant dudit UE (2) ;
- déterminer (9, 83), par ledit nœud d'accès (3), des paramètres de configuration de connexion (80) pour ledit UE (2), comprenant
la vérification si les paramètres de configuration de connexion (80) pour ledit UE (2) sont liés à une connexion antérieure entre ledit UE (2) et ledit réseau de télécommunication sont disponibles pour une réutilisation ; et
lorsque les paramètres de configuration de connexion (80) pour ledit UE (2) liés à ladite connexion antérieure entre ledit UE (2) et ledit réseau de télécommunication sont disponibles pour une réutilisation, l'utilisation desdits paramètres de configuration de connexion disponibles (80) comme entrée pour le processus de détermination des paramètres de configuration de connexion (80), dans lequel ladite détermination des paramètres de configuration de connexion (80) comprend en outre : la détermination (9, 83) desdits paramètres de configuration de connexion (80) sur la base desdits paramètres de configuration de connexion disponibles (80), et des paramètres de performance obtenus par lesdits paramètres de configuration de connexion liés à ladite connexion antérieure entre ledit UE (2) et ledit réseau de télécommunication ; et
- lorsqu'aucun paramètre de configuration de connexion (80) pour ledit UE (2) lié à une connexion antérieure entre ledit UE (2) et ledit réseau de télécommunication n'est disponible pour une réutilisation, ladite étape de détermination (9, 83) comprend :
- la détermination (9, 83) des paramètres de configuration de connexion (80) pour ledit UE (2) sur la base des paramètres de configuration de connexion disponibles (80) entre une pluralité d'UE et ledit nœud d'accès (3) ; et
- la connexion (84), par ledit nœud d'accès (3), dudit UE (2) audit réseau de télécommunication via ledit nœud d'accès (3) en établissant lesdits paramètres de configuration de connexion déterminés (80) pour ledit UE (2).

2. Procédé de connexion d'un UE (2) à un réseau de télécommunication selon la revendication 1, comprenant en outre l'étape consistant à :
- lors de la détection d'une connexion libérée entre ledit UE (2) et ledit réseau de télécommunication via ledit nœud d'accès (3), stocker (85) lesdits paramètres de configuration de connexion (80) de telle sorte que lesdits paramètres de configuration de connexion (80) soient disponibles, pour une réutilisation, lorsque ledit nœud d'accès (3) reçoit une autre demande de connexion à partir dudit UE (2).

3. Procédé de connexion d'un UE (2) à un réseau de télécommunication selon la revendication 2, dans lequel ladite étape de stockage comprend l'un quelconque parmi :
- le stockage (85), par ledit UE (2), desdits paramètres de configuration de connexion (80) liés audit nœud d'accès (3) ;
- le stockage (85), par ledit nœud d'accès (3), desdits paramètres de configuration de connexion (80) liés audit nœud d'accès (3) et audit UE (2) ;
- le transfert, par ledit nœud d'accès (3), desdits paramètres de configuration de connexion (80) à, et le stockage (85) de ladite configuration de connexion liée audit nœud d'accès (3) et audit UE (2) par une fonction de commande résidant dans, un nœud de contrôle (4) compris dans ledit réseau de télécommunication.

4. Procédé de connexion d'un UE (2) à un réseau de télécommunication selon la revendication 3, dans lequel lesdits paramètres de configuration de connexion (80) liés audit nœud d'accès (3) sont stockés par ledit UE (2), ledit procédé comprenant en outre l'étape consistant à :
- fournir, par ledit UE (2), lesdits paramètres de configuration de connexion (80) liés audit nœud d'accès (3), audit nœud d'accès (3) .

5. Procédé de connexion d'un UE (2) à un réseau de télécommunication selon l'une quelconque des revendications précédentes, dans lequel lesdits paramètres de configuration de connexion (80) comprennent l'un quelconque des éléments suivants
- une configuration d'agrégation de porteuses de fréquence via des bandes de fréquences sous licence et sans licence ;
- une configuration à double connectivité ;
- une configuration du faisceau d'antenne ;
- une configuration de synchronisation de la liaison montante;
- un historique du besoin et de l'utilisation de porteuses secondaires ;
- des informations géographiques ;
- des bandes de fréquences agrégées ;
- une bande passante agrégée ; et
- une configuration de mesure et de rétroaction.

6. Procédé de connexion d'un UE (2) à un réseau de télécommunication selon l'une quelconque des revendications précédentes, dans lequel ledit réseau de télécommunication comprend l'un quelconque d'un réseau de système de paquets évolués, EPS, d'un réseau de système universel de télécommunications mobiles, UMTS, d'un réseau de service général de paquets radio, GPRS, d'un réseau de système mondial de communications mobiles, GSM, et d'un réseau d'évolution à long terme, LTE.

7. Nœud d'accès agencé pour connecter un équipement utilisateur, UE (2), à un réseau de télécommunication, ledit réseau de télécommunication comprenant ledit nœud d'accès (3), ledit nœud d'accès (3) comprenant :
- un équipement de réception (71) agencé pour recevoir (82) une demande de connexion à partir d'un équipement utilisateur, UE (2) .
- un équipement de détermination (74) agencé pour déterminer (9, 83) des paramètres de configuration de connexion (80) pour ledit UE (2), au moins en :
vérifiant si les paramètres de configuration de connexion (80) pour ledit UE (2) liés à une connexion antérieure entre ledit UE (2) et ladite télécommunication sont disponibles pour une réutilisation ; et
lorsque les paramètres de configuration de connexion (80) pour ledit UE (2) liés à ladite connexion antérieure entre ledit UE (2) et ledit réseau de télécommunication sont disponibles pour une réutilisation, en utilisant lesdits paramètres de configuration de connexion disponibles (80) comme entrée pour le processus de détermination des paramètres de configuration de connexion (80) dans lequel ladite détermination des paramètres de configuration de connexion (80) comprend en outre : la détermination (9, 83) desdits paramètres de configuration de connexion (80) sur la base desdits paramètres de configuration de connexion disponibles (80), et des paramètres de performance obtenus par lesdits paramètres de configuration de connexion liés à ladite connexion antérieure entre ledit UE (2) et ledit réseau de télécommunication ; et
lorsqu'aucun paramètre de configuration de connexion (80) pour ledit UE (2) lié à une connexion antérieure entre ledit UE (2) et ledit réseau de télécommunication n'est disponible pour une réutilisation, ladite étape de détermination (9, 83) comprend:
- la détermination (9, 83) des paramètres de configuration de connexion (80) pour ledit UE (2) sur la base des paramètres de configuration de connexion disponibles (80) entre une pluralité d'UE et ledit nœud d'accès (3) ; et
- un équipement de connexion (72) agencé pour connecter (84) ledit UE (2) audit réseau de télécommunication en établissant lesdits paramètres de configuration de connexion déterminés (80) .

8. Nœud d'accès selon la revendication 7, comprenant en outre
- un équipement de détection (75) agencé pour détecter une connexion libérée entre ledit UE (2) et ledit réseau de télécommunication, et
- un équipement de stockage (76) agencé pour stocker (85) lesdits paramètres de configuration de connexion (80), lors de la détection d'une connexion libérée entre ledit UE (2) et ledit réseau de télécommunication, de telle sorte que lesdits paramètres de configuration de connexion (80) sont disponibles, pour une réutilisation, lorsque ledit nœud d'accès (3) reçoit une autre demande de connexion à partir dudit UE (2).

9. Nœud d'accès selon la revendication 8, dans lequel ledit équipement de stockage (76) est en outre agencé pour transmettre lesdits paramètres de configuration de connexion (80) à un nœud de contrôle (4) compris dans ledit réseau de télécommunication pour stocker (85) ladite configuration de connexion liée audit nœud d'accès (3) et audit UE (2) dans ledit nœud de contrôle (4) .

10. Nœud d'accès selon l'une quelconque des revendications 7 à 9, dans lequel lesdits paramètres de configuration de connexion (80) comprennent l'un quelconque parmi :
- une configuration d'agrégation de porteuses de fréquence via des bandes de fréquences sous licence et sans licence ;
- une configuration à double connectivité ;
- une configuration du faisceau d'antenne pour ledit nœud d'accès (3) ;
- une configuration de synchronisation de la liaison montante;
- des bandes de fréquences agrégées ;
- une bande passante agrégée ;
- un historique du besoin et de l'utilisation d'une configuration de porteuse de fréquence secondaire.

11. Nœud d'accès selon l'une quelconque des revendications 7 à 10, dans lequel :
- l'équipement de réception comprend un module de réception pour recevoir (82) la demande de connexion à partir de l'équipement utilisateur, UE (2) ;
- l'équipement de détermination comprend un module de détermination pour déterminer (9, 83) des paramètres de configuration de connexion (80) pour ledit UE (2) ;
- l'équipement de connexion comprend un module de connexion pour connecter (84) ledit UE (2) audit réseau de télécommunication en établissant lesdits paramètres de configuration de connexion déterminés (80).

12. Support de stockage non transitoire lisible par ordinateur, comprenant des instructions qui, lorsqu'elles sont exécutées sur au moins un processeur, amènent l'au moins un processeur à exécuter le procédé selon l'une quelconque des revendications 1 à 6.

13. Réseau de télécommunication conçu pour connecter un équipement utilisateur, UE (2), à un nœud d'accès (3) compris dans ledit réseau, dans lequel ledit nœud d'accès (3) comprend:
- un équipement de réception (71) agencé pour recevoir (82) une demande de connexion à partir d'un équipement utilisateur, UE (2) ;
- un équipement de détermination (74) agencé pour déterminer (9, 83) des paramètres de configuration de connexion (80) pour ledit UE (2), au moins en :
vérifiant si les paramètres de configuration de connexion (80) pour ledit UE (2) liés à une connexion antérieure entre ledit UE (2) et ledit réseau de télécommunication sont disponibles pour une réutilisation ; et lorsque les paramètres de configuration de connexion (80) pour ledit UE (2) liés à ladite connexion antérieure entre ledit UE (2) et ledit réseau de télécommunication sont disponibles pour une réutilisation, en utilisant lesdits paramètres de configuration de connexion disponibles (80) comme entrée pour le processus de détermination des paramètres de configuration de connexion (80) dans lequel ladite détermination des paramètres de configuration de connexion (80) comprend en outre : la détermination (9, 83) desdits paramètres de configuration de connexion (80) sur la base desdits paramètres de configuration de connexion disponibles (80), et des paramètres de performance obtenus par lesdits paramètres de configuration de connexion liés à ladite connexion antérieure entre ledit UE (2) et ledit réseau de télécommunication; et
lorsqu'aucun paramètre de configuration de connexion (80) pour ledit UE (2) lié à une connexion antérieure entre ledit UE (2) et ledit réseau de télécommunication n'est disponible pour une réutilisation, ladite étape de détermination (9, 83) comprend:
- la détermination (9, 83) des paramètres de configuration de connexion (80) pour ledit UE (2) sur la base des paramètres de configuration de connexion disponibles (80) entre une pluralité d'UE et ledit nœud d'accès (3) ; et
- un équipement de connexion (72) agencé pour connecter (84) ledit UE (2) audit réseau de télécommunication en établissant lesdits paramètres de configuration de connexion déterminés (80) .
